# EUROPEAN PATENT SPECIFICATION

(11) **EP 2 144 944 B1**
(45) Date of publication and mention of the grant of the patent: **06.06.2018**
(21) Application number: 08745336.1
(22) Date of filing: 09.04.2008
(51) Int. Cl.: C08G 18/10, C08G 18/32, C08G 18/36, C08G 18/42

(54) **POLYURETHANE ELASTOMER WITH ENHANCED HYDROLYSIS RESISTANCE**
POLYURETHAN-ELASTOMER MIT ERHÖHTER HYDROLYSE-RESISTENZ
ÉLASTOMÈRE POLYURETHANNE À RÉSISTANCE À L'HYDROLYSE AMÉLIORÉE

(30) Priority: 11.04.2007 US 922834 P
(43) Date of publication of application: 20.01.2010
(73) Proprietor: Dow Global Technologies LLC, Midland, MI 48674 (US)
(72) Inventor: VAIRO, Giuseppe, I-42015 Correggio (IT); ZANACCHI, Luciano, I-26030 Solarolo Rainerio (IT)
(74) Representative: Beck Greener
(86) International application number: PCT/US2008/059703
(87) International publication number: WO 2008/127926

(56) References cited:
- FR-A- 2 844 799
- US-A- 3 349 049
- US-A- 4 602 079
- US-A1- 2003 149 214

## Description

This invention relates to a process to produce a polyurethane polymers having, solvent and hydrolysis resistance, formulations for implementing this process and the use of such polymers.

Solid and microcellular elastomeric polyurethane polymer for applications such as, for example, shoe soles desirably exhibits good physical properties including especially abrasion resistance, flexibility and durability. Typically such elastomers are obtained by reaction of a prepolymer, which is the reaction product of a polyester polyols or polyether resin and an organic diisocyanate, with a hydroxylated compound consisting of at least one polyester or polyether polyol in the presence of a catalyst, blowing agent and surfactant. The preparation of polyurethane polymer by such procedures is described, for example, in patent publications E.P. 235,888; E.P. 175,733; U.S. Patents 3,591,532; 3,901,959; 4,647, 596 and 4,757,095.

Polyurethane elastomers from polyesters have good physical properties, however; they are sensitive to water and physical properties suffer from humid aging due to hydrolytic attach on the ester bond. This is particularly disadvantageous when the elastomers are intended to form certain shoe soles or when used to produce parts requiring a good resistance to hydrolysis. Urethane elastomers based on polyethers are not sensitive to hydrolysis but suffer from poor resistance to polar solvents and generally possess poorer physical properties.

To improve the hydrolysis resistance of polyester-based urethane elastomers, anti-hydrolysis additives, such as polycarbodiimides, are added to the formulation for elastomer production. Such additives are relatively costly and do not systematically achieve an improvement in the resistance to hydrolysis. Another approach to improve hydrolysis resistance of polyester elastomers, as disclosed in EP Publication 0 156 665 and U.S. Publication 2005/0124711, is to use dimerized fatty acids in the formulation of either the hydroxylated compound or the prepolymer. As compared to ester based polyurethane, properties of polyurethane elastomers obtained from polyester polyols from dimer acids have poorer physical properties.

There is still a need of having a polyurethane elastomer with intrinsic hydrolysis resistance, solvent resistance as defined in UNI EN 344, and matching the physical properties, abrasion resistance, fatigue resistance typical of polyester polyurethane.

It is therefore an object of the present invention to provide polyurethane elastomers based on polyester and polyether polyols with the elastomer having improved intrinsic hydrolytic stability while maintaining the typical characteristics of polyesters based polyurethanes, such as, abrasion and solvent resistance, tensile strength and fatigue resistance.

The present invention is a process for preparing a polyurethane polymer by contacting under reaction conditions:
a) an isocyanate component comprising an isocyanate-terminated prepolymer having an isocyanate (NCO) content of 2 to 45 weight percent where the prepolymer is the reaction product of a stoichiometric excess of one or more di- or polyisocyanate with a first polyol composition;
b) a second polyol composition; and
optionally in the presence of c) chain extenders, cross linkers, catalysts, and other additives;
wherein a), b) and components of c), when present, are provided at an isocyanate index of from 85 to 115; and the total polymer contains a polyesters based on a dimer fatty acid and/or dimer fatty diol in an amount of 5 to 30 wt percent wherein at least 60 weight percent of the total polyesters based on a dimer fatty acid and/or dimer fatty diol is present in b) and the total polymer contains from 5 to 33 wt percent of polyethers polyol wherein at least 70 weight percent. of the polyether is present in the prepolymer;
wherein the polyester based on a dimer fatty acid and/or dimer fatty diol have an average molecular weight of 1,000 to 5,000 daltons and contains at least one non-dimer polycarboxylic acid and the polyether polyol has an
average functionality of 2 to 8 and an average equivalent weight of 1,000 to 3,000 daltons.

In another embodiment, the polyurethane polymer is a solid polymer having a density of 1000 to 1200 kg/m³.

In a further embodiment, the above process is carried out in the present of a blowing agent to produce a microcellular elastomer having a density of 200 to 1200 kg/m³.

In a further embodiment, the polyol for the formation of the prepolymer is greater than 60 wt percent of a polyether polyol.

In yet another embodiment, the polyol used in the formation of the prepolymer is a polyether polyol which is a blend of (i) at least one diol or triol having a molecular weight of from 60 to 300 and (ii) at least one polyoxyalkylene polyol having an average functionality of from 2 to 4 and a molecular weight of from 3000 to 12000, wherein the parts by weight ratio of (a):(b) is from 0.01:1 to 0.5:1.

In another embodiment, the present invention is a shoe sole prepared by the processes described above.

In another embodiment, the invention is a two component system suitable for the production of a polyurethane wherein the system comprises an isocyanate component as described above and a polyol component as described above.

In another embodiment, the invention is a three component system comprising an isocyanate component as describe above, a polyol component as described above and a component which comprises a chain extender.

In a further embodiment, the invention is an elastomer having enhanced hydrolytic resistance wherein the elastomer is formed by the reaction of the polyisocyanate and polyol components above. In a further embodiment the elastomer is a thermoset polyurethane or a thermoplastic polyurethane.

The need of having a elastomer with the advantage of ether based and ester based polyurethane without any drawback is still unmet. The attempts to develop such materials by combining polyether and polyester polyols in the isocyanate composition, in the polyol composition and using a combination thereof, generally result in poor hydrolysis resistance or solvent resistance respectively if the ester or ether bonds are predominant.

Unexpectedly, by reacting a isocyanate prepolymer, where the polyol composition of the prepolymer is predominately a polyether polyol, and the second polyol composition containing at least a polyester polyol obtained from dimer fatty acids, the resulting polyurethane elastomer overcome the disadvantage of above.

As used herein the term polyols are those materials having at least one group containing an active hydrogen atom capable of undergoing reaction with an isocyanate. Preferred among such compounds are materials having at least two hydroxyls, primary or secondary, or at least two amines, primary or secondary, carboxylic acid, or thiol groups per molecule. Compounds having at least two hydroxyl groups or at least two amine groups per molecule are especially preferred due to their desirable reactivity with polyisocyanates.

It has been found when utilizing as part of the polyol component for an elastomer, a polyester formed from a dimer fatty acid and/or fatty diol, solid and microcellular elastomers produced with such polyesters have improved hydrolytic stability while maintaining good physical properties.

These advantages are observed where the dimer fatty acid comprises from 5 to 30 weight percent of the polyurethane polymer. For elastomer and for shoe sole applications, it is preferred the dimer fatty acid comprises from 6 to 25, preferably from 7-20 and more preferably from 7 to 16 weight percent of the elastomer.

To obtain the enhanced properties of the polyurethane polymer, it has also been found the final polymer includes from 5 to 30 wt percent of a polyether polyol. Preferably the final product contains from 5 to 25 wt percent, more preferably from 7 to 15 wt percent or at least one polyether polyol. The term polyurethane polymer as used herein is the reaction product of at least components a) and b) as defined above.

Generally at least 60 wt percent of the dimer fatty acid polyester is present in the polyol component b). Preferably at least 70 wt percent of the dimer fatty acid polyester in the polyurethane polyomer is present in the polyol component b) and more preferably at least 80 wt percent of the dimer fatty acid polyester is present in the polyol component. In other embodiments, the dimer fatty acid polyester present in the polyurethane polymer is supplied in at least 90 wt percent in the polyol component b) and even up to 100 wt percent in the polyol component b). In a like manner, generally at least 60 wt percent of the polyether polyol present in the polyurethane polymer is supplied in the NCO-terminated prepolymer. Preferably at least 70 wt percent of the polyether polyol in the polyurethane polymer is obtained from the prepolymer, more preferably at least 75 wt percent from the prepolymer component. In other embodiments, at least 80 wt percent of the polyether present in the polyurethane polymer is supplied from the prepolymer and 90 wt percent or greater. If desired, all the polyether component can be provided from the prepolymer.

While the dimer fatty acids and the combination with polyethers as described herein are particularly suited for the production of polyurethane elastomers, including thermoset and thermoplastic polyurethanes, they are particularly applicable to the production of microcellular elastomers where it is desired to have polyester based systems with increased hydrolysis resistance.

The polyester component b) is produced from the condensation reaction of dimer fatty acids and non-dimer polycarboxylic acids with a polyhydroxy compound. Dimer fatty acids are known in the art, see for example, publication US 2005/0124711, and in general are dimerization products of mono- or polyunsaturated fatty acids and/or esters thereof. Such dimer fatty acids are dimers of C₁₀ to C₃₀, more preferably C₁₂ to C24, and more preferably C₁₄ to C₂₂ alkyl chains. Suitable dimer fatty acids for producing the polyesters of the present invention include dimerization products of oleic acid, linoleic acid, linolenic acid, palmitoleic acid and elaidic acid. The dimerization products of the unsaturated fatty acid mixtures obtained in the hydrolysis of natural fats and oils, for example sunflower oil, soybean oil, olive oil, rapeseed oil, cottonseed oil and tall oil, may also be used.

Suitable non-dimer polycarboxylic acids can have two or more carboxylic acid groups or an equivalent number of anhydride groups on the basis that one anhydride group is equivalent to two acid groups. Such polycarboxylic acids are well known in the art. Preferably the polycarboxylic acid contains two carboxylic acid groups.

Examples of suitable polycarboxylic acids include aliphatic dicarboxylic acids having 2 to 12, preferably 2 to 8 carbon atoms in the alkylene radical. These acids include, for example, aliphatic dicarboxylic acids such as adipic acid, glutaric acid, pimelic acid, suberic acid, azelaic acid, sebacic acid, undecanedoic acid, dodecanadioic acid, succinic or hexanedioic acid; cycloaliphatic acids such as hexahydrophthalic acid and 1,3- and 1,4-cyclohexane dicarboxylic acid; 1,3- and 1,4-unsaturated alkane dioic acids such as fumaric or maleic acids; and aromatic acids such as phthalic acid and terephthalic. The anhydrides of the aforementioned polybasic acids such as maleic anhydride or phthalic anhydride can also be used. A combination of two or more of the polybasic acids may also be used. In one embodiment, it is preferred to use glutaric acid, succinic acid, adipic acid or a combination thereof. Such combination of acids are commercially available and generally comprise from 19 to 26 weight percent adipic acid, from 45-52 weight percent glutaric acid, and 16 to 24 weight percent succinic acid.

Examples of suitable polyhydroxy compounds are ethylene glycol, diethylene glycol, propylene glycol, dipropylene glycol, 1,3-propanediol, 1,10-decanediol, glycerine, trimethylolpropane, 1,4-butanediol, 1,6-hexanediol and 1,3-/1,4-cyclohexanedimethanol. If trifunctional or higher alcohols are used for the manufacture of the polyester polyols, for the production of elastomer for shoe soles, their amount is generally chosen in such that the functionality of a blend is a maximum of 2.8, preferably from 2 to 2.3. In one embodiment, ethylene glycol, diethylene glycol, butanediol, or a combination is used as an additional glycol component.

In addition to the dimer fatty acids, dimerisation usually results in varying amounts of oligomeric fatty acids, such as trimers, and residues of monomeric fatty acids, or esters thereof, being present. Commercially available products, such as those available from Uniqema, generally have a dicarboxylic (dimer) content of greater than 60percent and up to greater than 95 percent. The trimer content is generally less than 40percent and is preferably in the range of 2 to 25 percent for use in the present invention.

For the present invention the range of dimer fatty acid polyesters contain dimer acids in the range 5 to 80 percent more preferably 10-60percent,and especially 1 5 to 40 percent by weight of the total polyester composition.

The polyester preferably has a molecular weight number average in the range from 1,000 to 5,000, more preferably 1,700 to 3,000, particularly from 1,800 to 2,500 and more preferably from 1,900 to 2,200. The polyester preferably has a hydroxyl number from 10 to 100, preferably from 30 to 80 and more preferably from 40 to 70 mg KOH/g. In addition, the polyester generally has an acid value of less than 2, preferably less than 1.5, and more preferably less than 1.3.

Processes for the production of polyester polyols are well known in the art. To prepare the polyester polyols, the dimer and non-dimer poycarboxylic acids are polycondensed with polyhydroxy compounds. To remove volatile byproducts, the polyester polyols can be subjected to distillation under reduced pressure, stripping with an inert gas, vacuum, etc.

The polyurethane prepolymers used in producing the elastomers of the present invention include a polyisocyanate component and an isocyanate reactive component also known as an active hydrogen containing material or polyol. The term polyurethane includes polymers containing linkages known to those in the art associated with the formation of a polyurethane, such as urea or polyureas, allophonate, biuret, etc.

The polyisocyanate component of the prepolymer formulations of the present invention can be advantageously selected from organic polyisocyanates, modified polyisocyanates, and mixtures thereof, and include aliphatic, aromatic and cycloaliphatic isocyanates. Aromatic polyisocyanates include, for example, 2,4- and 2,6-toluenediisocyanate (TDI) and the corresponding isomeric mixtures; 4,4'-, 2,4'- and 2,2'-diphenyl-methanediisocyanate (MDI) and the corresponding isomeric mixtures; polyphenyl polymethylene polyisocyanates (PMDI); and mixtures of the forgoing. Examples of aliphatic and cycloaliphatic isocyanate compounds include 1,6-hexamethylene-diisocyanate (HDI); isophorone diisocyanate (IPDI); 1,4-tetramethylene diisocyanate; 1-isocyanato-3,5,5-trimethyl-1-3-isocyanatomethyl-cyclohexane; 2,4- and 2,6-hexahydrotoluene-diisocyanate, the isomeric mixtures thereof; 4,4'-, 2,2'- and 2,4'-dicyclohexylmethanediisocyanate, the isomeric mixtures thereof; 1,3-tetramethylene xylene diisocyanate; norbane diisocyanate; and 1,3- and 1,4-bis(isocyanatomethyl)cyclohexane can also be used with the present invention. Mixtures of the aromatic, aliphatic and cycloaliphatic isocyanates may also be used.

The polyisocyanate component of the formulations of the present invention can also include so-called modified multifunctional isocyanates, that is, products which are obtained through chemical reactions of the above diisocyanates and/or polyisocyanates. Exemplary are polyisocyanates containing esters, ureas, biurets, allophanates, carbodiimides and/or uretonimines; isocyanurate and/or urethane group containing diisocyanates or polyisocyanates.

In one preferred embodiment, the isocyanate-terminated prepolymers are prepared with 4,4'-MDI, or other MDI blends containing a substantial portion of the 4,4'-isomer or MDI modified as described above. Preferably the MDI contains 90 and more preferably greater than 95 percent by weight of the 4,4'-isomer.

The polyol component for producing a prepolymer, or which can comprise part of the polyol portion b) can be selected from polyether polyols, polyester polyols (can there be polyesters other than the dimer fatty acid polyester, polyhydroxy-terminated acetal resins, hydroxyl-terminated amines and polyamines. Examples of these and other suitable isocyanate-reactive materials are described more fully in U.S. Patent 4,394,491. Alternative polyols that may be used include polyalkylene carbonate-based polyols and polyphosphate-based polyols.

Suitable polyether polyols include those having a nominal functionality of from 2 to 8, preferably 2 to 6 and more preferably from 2-4. A blend of polyols can be used and such a blend will generally have an average functionality of 2 to 4 and more preferably from 2 to 3. The average equivalent weight of the polyol or polyol blend is generally from 1,000 to 3,000, preferably from 1,100 to 2,500 and more preferably from 1,200 to 2,200. Typically such polyether polyols may be obtained by reaction of an active hydrogen-containing initiator with a quantity of one or more alkylene oxides to give a product of desired hydroxyl nature and equivalent weight. Generally such alkylene oxides are C2 to C4 alkylene oxides and include butylenes oxide, ethylene oxide and propylene oxide or a mixture thereof. Exemplary initiators for polyether polyols include, for example, ethanediol, 1,2- and 1,3-propanediol, diethylene glycol, dipropylene glycol, tripropyleneglycol; polyethyleneglycol, polypropylene glycol; 1,4-butanediol, 1,6-hexanediol, glycerol, pentaerythritol, sorbitol, sucrose, neopentylglycol; 1,2-propylene glycol; trimethylolpropane glycerol; 1,6-hexanediol; 2,5-hexanediol; 1,4-butanediol; 1,4-cyclohexane diol; ethylene glycol; diethylene glycol; triethylene glycol; 9(1)-hydroxymethyloctadecanol, 1,4-bishydroxymethylcyclohexane; 8,8-bis(hydroxymethyl)tricyclo[5,2,1,0^{2,6}]decene; Dimerol alcohol (36 carbon diol available from Henkel Corporation); hydrogenated bisphenol; 9,9(10,10)-bishydroxymethyloctadecanol; 1,2,6-hexanetriol; and combination thereof. Catalysis for production of polyether polyols can be either anionic or cationic, with catalysts such as KOH, CsOH, boron trifluoride, a double metal cyanide complex (DMC) catalyst such as zinc hexacyanocobaltate or quaternary phosphazenium compound.

Other initiators for polyether polyols include linear and cyclic compounds containing an amine. Exemplary polyamine initiators include ethylene diamine, neopentyldiamine, 1,6-diaminohexane; bisaminomethyltricyclodecane; bisaminocyclohexane; diethylene triamine; bis-3-aminopropyl methylamine; triethylene tetramine various isomers of toluene diamine; diphenylmethane diamine; N-methyl-1,2-ethanediamine, N-Methyl-1,3-propanediamine, N,N-dimethyl-1,3-diaminopropane, N,N-dimethylethanolamine, 3,3'-diamino-N-methyldipropylamine, N,N-dimethyldipropylenetriamine, aminopropyl-imidazole.

Polylactone polyols may also be used and are generally di-or tri- or tetra-hydroxyl in nature. Such polyol are prepared by the reaction of a lactone monomer; illustrative of which is δ-valerolactone, ε-caprolactone, ε-ethyl-ε-caprolactone, ξ-enantholactone, ; with an initiator that has active hydrogen-containing groups; illustrative of which is ethylene glycol, diethylene glycol, propanediols, 1,4-butanediol, 1,6-hexanediol, trimethylolpropane, . The production of such polyols is known in the art, see, for example, United States Patent Nos. 3,169,945, 3,248,417, 3,021,309 to 3,021,317. The preferred lactone polyols are the di-, tri-, and tetra-hydroxyl functional ε-caprolactone polyols known as polycaprolactone polyols.

In one embodiment, at least one polyol which contains autocatalytic activity and can replace a portion or all of the amine and/or organometalic catalyst generally used in the production of polyurethane foams. Alternatively, such autocatalytic polyols may be added to enhance the demold time. When used, such autocatalytic polyols are generally part of the blend of the second polyol component.

Such autocatalytic polyols are disclosed in EP 539,819, in U.S. Patents 5,672,636; 3,428,708; 5,482,979; 4,934,579 and 5,476,969 and in WO 01/58,976.

Polyesters which can be used in addition to the those containing dimer fatty acids, are the condensation product of a polycarboxylic acid and polyhydroxy compound as described above for producing the dimer fatty acid polyesters.

In one embodiment, a portion of the polyether in the prepolymer is a diol or trol having a molecular weight of 60 to 300 to form a soft-segment isocyanate-terminated prepolymer as disclosed in U.S. Patent 5,418,259. For the present invention, to form a soft-segment prepolymer, the polyol is a blend of a) at least one diol or triol having a molecular weight of 60 to 300 and b) at least one polyoxyalkylene polyol having an average functionality of from 2 to 4 and a molecular weight of from 3000 to 12,000 wherein the parts by weight ratio of (a):b) is from 0.01:1 to 0.5:1. In a further embodiment, the prepolymer is a soft-segment prepolymer as.

The isocyanate-terminated prepolymer for use in the present inventions are prepared by standard procedures well known to a person skilled in the art and such as disclosed in U.S. Patents 4,294,951; 4,555,562; 4,182,825 or PCT Publication WO2004074343. The components are typically mixed together and heated to promote reaction of the polyols and the polyisocyanate. The reaction temperature will commonly be within the range of 30°C to 150°C; a more preferred range being from 60°C to 100°C. The reaction is advantageously performed in a moisture-free atmosphere. An inert gas such as nitrogen, argon or the like can be used to blanket the reaction mixture. If desired, an inert solvent can be used during preparation of the prepolymer, although none is needed. A catalyst to promote the formation of urethane bonds may also be used.

The isocyanate is used in stoichiometric excess and reacted with the polyol component using conventional prepolymer reaction techniques to prepare prepolymers having from 2 to 45 weight percent free NCO groups. For producing elastomers for shoe soles with aromatic isocyantes, the prepolymers generally have from 2 to 30 weight percent free NCO groups, preferably from 5 to 25 weight percent, and more preferably from 10 to 25 weight percent.

In addition to the polyols described herein above other suitable polyols which may be present in the second polyol component include so-called polymer polyols such as described in U.S. Patent 4,394,491. Among the useful polymer polyols are dispersions of polymer, especially vinyl monomers, particularly styrene/acrylonitrile copolymers, in a continuous polyether polyol, polyester polyol phase or a mixture of polyether and polyester polyols.. Also useful are the polyisocyanate polyaddition (PIPA) polyols (dispersions of polyurea-polyuretahne particles in a polyol) and the polyurea dispersion in polyol, such as, polyharnstoff (PHD) polyols. Such polyols are described in "Polyurethane Handbook", by G. Oertel, Hanser publishers. Copolymer polyols of the vinyl type are described in, for example, U.S. Patents 4,390,645; 4,463,107; 4,148,840 and 4,574,137.

It is also possible to use one or more chain extenders for the production of polyurethane polymers and elastomers of the present invention. The presence of a chain extending agent provides for desirable physical properties, of the resulting polymer. The chain extenders may be blended with the polyol component ii) or may be present as a separate stream during the formation of the polyurethane polymer. For purposes of this invention, a chain extender is a material having two isocyanate-reactive groups per molecule and an equivalent weight per isocyanate-reactive group of less than 400, preferably less than 300 and especially from 31-125 daltons. Representative of suitable chain-extending agents include polyhydric alcohols, aliphatic diamines including polyoxyalkylenediamines, aromatic diamines and mixtures thereof. The isocyanate reactive groups are preferably hydroxyl, primary aliphatic or aromatic amine or secondary aliphatic or aromatic amine groups. Representative chain extenders include amines ethylene glycol, diethylene glycol, 1,3-propane diol, 1,3- or 1,4-butanediol, dipropylene glycol, 1,2- and 2,3-butylene glycol, 1,6-hexanediol, neopentylglycol, tripropylene glycol, ethylene diamine, 1,4-butylenediamine, 1,6-hexamethylenediamine, phenylene diamine, 1,5-pentanediol, 1,6-hexanediol, bis(3-chloro-4-aminophenyl)methane, 3,3'-dichloro-4,4-diaminodiphenylmethane, 4,4'-diaminodiphenylmethane, bisphenol-A; bisphenol-F, 1,3-propane di-p-aminobenzene, methylene bisorthochloroaniline (MOCA), 1,3-cyclohexandiol, 1,4-cyclohexanediol; 2,4-diamino-3,5-diethyl toluene 1,3-cyclohexane dimethanol, 1,4-cyclohexane dimethanol, and mixtures thereof. If used, chain extenders are typically present in an amount from 0.5 to 20, especially 2 to 16 parts by weight per 100 parts by weight of the polyol component. Such chain extenders are generally added in the production of elastomer.

Crosslinkers may also be included in formulations for the production of polyurethane polymers of the present invention. For purposes of this invention "crosslinkers" are materials having three or more isocyanate-reactive groups per molecule and an equivalent weight per isocyanate-reactive group of less than 400. Crosslinkers preferably contain from 3-8, especially from 3-4 hydroxyl, primary amine or secondary amine groups per molecule and have an equivalent weight of from 30 to 200, especially from 50-125. Examples of suitable crosslinkers include diethanol amine, monoethanol amine, triethanol amine, mono- di- or tri(isopropanol) amine, glycerine, trimethylol propane, pentaerythritol, sorbitol. If used, suitable amounts of crosslinkers are from 0.1 to 1 part by weight, especially from 0.25 to 0.5 part by weight, per 100 parts by weight of polyols.

Elastomers of reduced density are generally prepared are prepared in the presence of a blowing agent. The blowing agent is present in an amount effective to produce the desired density, generally in the range of 200 kg/m³ to 1200 kg/m³. When shoe soled consists of two or more layers, such a sole will generally have a compact wear layer with a density of 900 to 1180 kg/m³ and a comfort layer having a density of 300 to 500 kg/m³. When water is used as the blowing agent, the amount of water may, is typically present from 0.01 parts to 2.0 parts and preferably 0.05 to 1.5 parts by weight of the second polyol component. More preferably water is present from 0.05 to 1.0 parts per 100 parts by weight of the second polyol component.

In addition to water, low boiling point liquids may be used as physical blowing agents. Generally such liquid is an inert organic compound that can vaporize under the influence of the reaction exotherm and typically has a boiling point of below 100° C. Exemplary of suitable organic compounds include halogenated hydrocarbons such as, for example, methylene chloride, trichlorofluoromethane, trans-1,2-dichloroethane, dichlorodifluoromethane, dichlorofluoromethane, dichlorotetrafluoroethane, 1,1,2-trichloro-1,2,2- trifluoroethane, 1,1,1-trichloroethane, 1,1,1-trichlorodifluoroethane, 1,1,1- trichlorofluoroethane, 1,1,1,2-tetrafluoroethane (134a), 1,1,1,3,3-pentafluorobutane (365mfc), 1,1,1,2,3,3,3-heptafluropropane (HFA 227), 1,1,1,3,3-pentafluoropropane (245fa), methyl formate, and mixtures thereof. Mixtures of these low boiling liquids with each other and or with hydrocarbons such as, for example, pentane (cyclopentane, isopentane, n-pentane), or entrained gases such as air, nitrogen or carbon dioxide may be used. Hydrocarbons and entrained gases may also be present in the absence of above mentioned types of low boiling liquids. Carbamates, such as disclosed in U.S. Patents 5,789,451 and 6,316,662 and EP 1 097 954, which release carbon dioxide during the foaming process, may also be used to provide a physical blowing agent. Typically, when present such physical blowing agents are used in an amount of from 0.1 to 10, preferably from 1 to 8 and more preferably from 1.5 to 6 weight percent by total weight of the second polyol component and optional chain-extending/cross-linking agent present. A combination of water and physical blowing agents may be used.

The ratio of the isocyanate component a) to the sum of the second polyol composition b) and chain extenders and/or crosslinkers when present, is preferably at an isocyanate index of 85 to 115. Preferably the isocyanate index is from 90 to 110 and more preferably from 95 to 105. The isocyanate index is defined as 100 times the ratio of NCO groups to reactive hydrogens contained in the reaction mixture.

When preparing the polyurethane polymer according to the invention, optionally but advantageously there are present additional additives including catalysts, surfactants, fillers, pigments, fire retardants, antioxidants, and antistatic agents. Such additive can be blended in with the polyol component ii) or may be added in a separate stream to a mix-head. The use of such additives is well-known in the art and reference is made thereto for this purpose.

Suitable catalysts include the tertiary amine and organometallic compounds such as described in U.S. Pat. 4,495,081. When using an amine catalyst advantageously it is present in from 0.1 to 3, preferably from 0.1 to 1 and more preferably from 0.4 to 0.8 weight percent by total weight of polyol and optional chain extending agent. When the catalyst is an organometallic catalyst, advantageously it is present in from 0.001 to 0.2, preferably from 0. 002 to 0.1 and more preferably from 0.01 to 0.05 weight percent by total weight of polyol and optional chain extending agent. Particularly useful catalysts include in the case of amine catalysts; triethylenediamine, bis(N,N- dimethylaminoethyl)ether and di(N,N-dimethylaminoethyl)amine and in the case of the organometallic catalysts; stannous octoate, dibutyltin dilaurate, and dibutyltin diacetate. Combinations of amine and organometallic catalysts advantageously may be employed.

Suitable surfactants include the diverse silicone surfactants, preferably those which are block copolymers of a polysiloxane and a polyoxyalkylene. Exemplary of such surfactants are the products DC-193 and Q4- 3667 available from Dow Corning, Tegostab B8950 available from Goldschmidt; and GE L6900. When present, the amount of surfactants advantageously employed is from 0.1 to 2, and preferably from 0.2 to 1.3 percent by total weight of the polyol and optional chain extending agent. Other suitable surfactants also include non- silicone containing surfactants, such as poly(alkyleneoxides).

Suitable pigments and fillers include for example calcium carbonate, graphite, carbon black, titanium dioxide, iron oxide, microspheres, alumina trihydrate, wollastonite, prepared glass fibers dropped or continuous, polyesters and other polymeric fibers.

The polyurethane polymer prepared according to the process of this invention is a solid or a microcellular polyurethane polymer. Such a polymer is typically prepared by intimately mixing the reaction components at room temperature or a slightly elevated temperature for a short period and then pouring the resulting mixture into an open mold, or injecting the resulting mixture into closed mold, which in either case is heated. The mixture on reacting out takes the shape of the mold to produce a polyurethane polymer of a predefined structure, which can then when sufficiently cured be removed from the mold with a minimum risk of incurring deformation greater than that permitted for its intended end application. Suitable conditions for promoting the curing of the polymer include a mold temperature of typically from 20°C. to 150°C., preferably from 35°C to 75°C, and more preferably from 45°C to 55°C. Such temperatures generally permit the sufficiently cured polymer to be removed from the mold typically in from 1 to 10 minutes and more typically from 1 to 5 minutes after intimately mixing the reactants. Optimum cure conditions will depend on the particular components including catalysts and quantities used in preparing the polymer and also the size and shape of the article manufactured.

The elastomers according to the invention are particularly suitable for use in applications where good energy-absorbing and fatigue properties are required and a good elastomeric behaviour over a broad temperature range, for example in the automotive and footwear industry. The elastomers can be used as in-soles, mid-soles and out-soles of shoes and boots and in steering wheels, sound insulation mats, air-filter seals and dashboard-skins.

The following examples illustrate the present invention but are not intended to limit the scope thereof. All parts and percentages are by weight unless otherwise indicated. Unless stated otherwise, all molecular weights expressed herein are weight average molecular weight.

A description of the raw materials used in the examples is as follows.
- Additive A: is CATAFOR F, a quaternary ethosulfate dissolved in MEG available from Rhodia.
- Catalyst A: is DABCO* 33 LM catalyst; triethylenediamine; 33 percent in ethylene glycol available from Air Products. DABCO is a trademark of Air Products.
- Catalyst B: is DABCO 33 LB catalyst; triethylenediamine; 33 percent in butanediol, available from Air Products
- Catalyst C: is dibutyltindilaurate, available from Air Products as DABCO T-12. catalyst;
- MEG: is ethylene glycol.
- DEG: is diethylene glycol.
- BD: 1,4-butanediol.
- Pripol 1027: is a dimerised fatty acid available from Uniqema, (monomer 1-3percent, dimer 75-80percent, trimer 18-22percent).
- Dimerate Diol A: is a polyester polyol prepared from dimer fatty acids (Pripol 1027), non dimer acids (adipic, glutaric and succinic) and BD; OH=47 mgKOH/g, acidity<1 mgKOH/g; prepared in a 50 liter reactor lab with nitrogen stripping method. The blend of adipic, glutaric and succinic acids is obtained from Rhodia and is reported to have range, based on percent weight, of 19-26, 45-52 and 16-24 of the acids respectively.
- Dimerate Diol B: is a polyester polyol prepared from dimer fatty acids (Pripol 1027), non dimer acids (adipic, glutaric and succinic) and DEG; OH=57 mgKOH/g, acidity<1 mgKOH/g; prepared in a 50 liter reactor lab with nitrogen stripping.
- VORALAST* GS 795: is a prepolymer based on MDI and polyMEG-DEG-adipate polyols; NCO=18.3percent, available from The Dow Chemical Company.
- VORALAST GS 749: is a prepolymer based on MDI and polyMEG-DEG-adipate polyols; NCO=18percent, available from The Dow Chemical Company (TDCC).
- VORALAST GT 999: is a prepolymer based on MDI and polyMEG-DEG-adipate polyols; NCO=18.3 percent, available from TDCC.
- ISONATE* M 342: is a MDI-polyether prepolymer, NCO=23percent available from TDCC.
- VORALAST GT 5010: is a MDI-polyether prepolymer, NCO=20.8percent available from TDCC.
- VORALAST GP 3100: is a 2000 MW polyester diol produced from adipic acid, ethylene glycol and diethylene glycol, available from TDCC.
- VORANOL* EP 1900: is a 4000 MW PO/EO copolymer diol, available from TDCC.

*VORALAST, ISONATE and VORANOL are all trademarks of The Dow Chemical Company.

Test plates of polyester polyurethane are obtained by reacting the isocyanate and polyol components using a low pressure machine. The machine is equipped with separate tanks for the isocyanate and polyol components, dosing pumps and a mixing head. The components are dosed, mixed and poured in a mold; either 20x20x0.6 cm or 20x20x1 cm.

Tensile strength, elongation at break and flex fatigue resistance are measured according to DIN 53543 test method; density is measured according to ISO 845; abrasion resistance measured according to DIN 53516.

According to UNI EN344, hydrolysis ageing has been conducted at 70°C, 100percent humidity, and solvent resistance has been tested by immersion of specimen in 2,2,4-trimethylpentane (iso-octane) for 22 ± 0.25 hours and measuring the volume increase.

### Comparatives C1-C3

Examples C1-C3 are comparative and passed on the formulations give in Tables 1-3.

### EXAMPLE C1: Polyester system

**Table 1**

| **EXAMPLE C1** | |
|---|---|
| ***Isocyanate*** | ***pbw**** |
| Voralast™ GS 795 | 59 |

| ***Polyol*** | |
|---|---|
| Voralast™ GP 3100 | 94.5 |
| MEG | 4.1 |
| Catalyst A | 1.4 |

| | |
|---|---|
| *pbw is parts by weight. | |

### EXAMPLE C2: Polyether system

**Table 2**

| **EXAMPLE C2** | |
|---|---|
| ***Isocyanate*** | ***pbw*** |
| Isonate™ M 342 | 43 |

| ***Polyol*** | |
|---|---|
| Voranol™ EP 1900 | 89.5 |
| BD | 6.1 |
| MEG | 0.5 |
| Catalyst B | 1.8 |
| Catalyst C | 0.03 |
| ADDITIVE A | 0.02 |
| Water | 0.1 |

### EXAMPLE C3: Polyester system with dimer acid polyol

**Table 3**

| **EXAMPLE C3** | |
|---|---|
| ***Isocyanate*** | ***pbw*** |
| Voralast™ GT 999 | |

| *Polyol* | |
|---|---|
| Voralast™ GP 3100 | 47.2 |
| Dimerate Diol B | 47.2 |
| MEG | 4.1 |
| Catalyst A | 1.4 |

### Examples 1 and 2

The formulations of examples 1 and 2 as given in Tables 4 and 5 are formulations according to the present invention.

**Table 4**

| **Example 1** | |
|---|---|
| ***Isocyanate*** | ***pbw*** |
| Voralast™ GT 5010 | 59 |

| *Polyol* | |
|---|---|
| Dimerate Diol A | 93.8 |
| BD | 5.1 |
| Catalyst B | 1.2 |

**Table 5**

| **EXAMPLE 2** | |
|---|---|
| ***Isocyanate*** | ***pbw*** |
| Voralast™ GT 5010 | 56 |

| ***Polyol*** | |
|---|---|
| Voralast™ GP 3100 | 47.2 |
| Dimerate Diol B | 47.2 |
| MEG | 4.1 |
| Catalyst A | 1.4 |

Test plates using the formulations of comparatives C1-C3 and examples 1 and 2 are obtained by the process described above. Samples of polyurethane obtained are tested for solvent resistance according to EN 344 (swelling in iso- octane). Hydrolysis ageing is conducted at 70°C, 100 percent humidity for 1 and 2 weeks. Flex fatigue test have been performed at 23°C, with Texon and cut, using a DeMattia equipment. According to EN 344, volume increase after immersion in isooctane must be less than 12 percent. The results of these tests are given in Table 5.

**TABLE 6**

| | ***Density*** | ***Volume Increase*** | ***Retention of tensile strength after 1 week hydrolysis*** | ***Flex fatigue after 1 week hydrolysis*** | ***Flex fatigue after 2 weeks hydrolysis*** |
|---|---|---|---|---|---|
| | ***g*/*cm³*** | ***percent*** | ***percent*** | ***kcycles*** | ***kcycles*** |
| **EXAMPLE C1** | 1.13 | <1 | <20 | <5 | n.a. |
| **EXAMPLE C2** | 0.98 | 17 | n.a. | n.a. | n.a. |
| **EXAMPLE C3** | 1.13 | n.a | n.a. | 100. | <5 |
| **EXAMPLE 1** | 1.06 | 4 | 66 | n.a. | n.a. |
| **EXAMPLE 2** | 1.13 | 4 | 75 | >100 | > 100 |

These results show elastomers based on the formulations of the present invention have good solvent resistances and retention of tensile strength and improved resistance to flex fatigue.

Other embodiments of the invention will be apparent to those skilled in the art from a consideration of this specification or practice of the invention disclosed herein. It is intended that the specification and examples be considered as exemplary only, with the true scope and spirit of the invention being indicated by the following claims.

## Claims

1. A process for preparing a polyurethane polymer by contacting under reaction conditions:
a) an isocyanate component comprising an isocyanate-terminated prepolymer having an isocyanate (NCO) content of 2 to 45 weight percent where the prepolymer is the reaction product of a stoichiometric excess of one or more di- or polyisocyanate with a first polyol composition;
b) a second polyol composition; and
optionally in the presence of c) chain extenders, cross linkers, catalysts, and other additives; wherein a), b) and components of c), when present, are provided at an isocyanate index of from 85 to 115; and
the total polymer contains a polyester based on a dimer fatty acid and/or dimer fatty diol in an amount of 5 to 30 wt percent, wherein at least 60 weight percent of the total polyester based on a dimer fatty acid and/or dimer fatty diol is present in b); and
the total polymer contains from 5 to 33 wt percent of polyether polyol, wherein at least 70 weight percent of the polyether is present in the prepolymer;
wherein the polyester based on a dimer fatty acid and/or dimer fatty diol has an average molecular weight of 1,000 to 5,000 daltons and contains at least one non-dimer polycarboxylic acid and the polyether polyol has an average functionality of 2 to 8 and an average equivalent weight of 1,000 to 3,000 daltons.

2. The process of claim 1 wherein at least 70 weight percent of the total polyester based on a dimer fatty acid and/or dimer fatty diol is present in b).

3. The process of claim 1 wherein at least 80 weight percent of the total polyester based on a dimer fatty acid and/or dimer fatty diol is present in b).

4. The process of claim 1 wherein all the total polyester based on a dimer fatty acid and/or dimer fatty diol is present in b).

5. The process of claim 1 wherein the polycarboxylic acid is adipic acid, glutaric acid, pimelic acid, suberic acid, azelaic acid, sebacic acid, undecanedioic acid, dodecanedioic acid, succinic acid, hexanedioic acid; hexahydrophthalic acid, 1,3- cyclohexane dicarboxylic acid, 1,4-cyclohexane dicarboxylic acid; fumaric acid, maleic acid; phthalic acid, terephthalic acid or a mixture thereof.

6. The process of claim 5 wherein the polycarboxylic acid is a mixture of adipic acid, glutaric acid and succinic acid.

7. The process of claim 6 wherein the weight percent of the acids are 19 to 26 adipic; 45 to 52 glutaric and 16 to 24 succinic wherein the total weight ratios equal 100.

8. The process of claim 1 wherein at least 80 weight percent of the polyether is present in the prepolymer.

9. The process of claim 1 wherein the prepolymer is a soft- segment prepolymer wherein the polyol comprises a polyether polyol which is a blend of (i) at least one diol or triol having a molecular weight of from 60 to 300 and (ii) at least one polyoxyalkylene polyol having an average functionality of from 2 to 4 and a molecular weight of from 3000 to 12000, wherein the parts by weight ratio of (a):(b) is from 0.01:1 to 0.5:1.

10. The process of Claim 1 wherein the polyester contains an additional glycol selected from ethylene glycol, diethylene glycol, propylene glycol, dipropylene glycol, 1,3-propanediol, 1,10-decanediol, glycerine, trimethylolpropane, 1,4-butanediol, 1,6-hexanediol, or a mixture thereof.

11. The process of Claim 10 wherein the additional glycol is ethylene glycol, diethylene glycol, or a combination thereof.

12. The process of Claim 1 wherein the polyisocyanate is an aromatic polyisocyanate.

13. The process of Claim 12 wherein the polyisocyanate is MDI, TDI, PMDI or a mixture thereof.

14. The process of Claim 13 wherein the polyisocyanate is MDI having greater than 90 weight percent of the 4,4' -isomer.

15. The process of claim 1 wherein the polyisocyanate is an aliphatic isocyanate.

16. The process of claim 15 wherein the polyisocyanate is HDI, IPDI, H12MDI, 1,2-bis(isocyanatomethyl)cyclohexane or a mixture thereof.

17. The process of claim 12 wherein the prepolymer has an isocyanate content of from 2 to 30 weight percent.

18. The process of claim 1 wherein the process includes the addition of chain extender in an amount from 0.5 to 10 percent by weight of the second polyol.

19. The process of claim 18 wherein the chain extender is 1,3- cyclohexane dimethanol, 1,4-cyclohexane dimethanol or a mixture thereof.

20. The process of claim 1 wherein water is the blowing agent at 0.05 to 2.0 parts by weight of the second polyol component.

21. A shoe sole produced by the process of any one of claims 1 to 20.

22. A two component system suitable for the production of a polyurethane wherein the system comprises the isocyanate component a) defined in claim 1 and the second polyol composition b) as defined in claim 1.

23. A three component system comprising the isocyanate component a) defined in claim 1, the second polyol composition b) as defined in claim 1 and a component which comprises a chain extender.

## Patentansprüche

1. Ein Verfahren zum Herstellen eines Polyurethanpolymers durch In-Kontakt-Bringen der Folgenden unter Reaktionsbedingungen:
(a) einer Isocyanatkomponente, beinhaltend ein isocyanatterminiertes Präpolymer mit einem Isocyanatgehalt (NCO-Gehalt) von 2 bis 45 Gewichtsprozent, wobei das Präpolymer das Reaktionsprodukt eines stöchiometrischen Überschusses eines oder mehrerer Di- oder Polyisocyanate mit einer ersten Polyolzusammensetzung ist;
b) einer zweiten Polyolzusammensetzung; und
optional in Gegenwart von c) Kettenverlängerern, Vernetzungsmitteln, Katalysatoren und anderen Zusatzstoffen;
wobei a), b) und Komponenten aus c), wenn vorhanden, mit einem Isocyanatindex von 85 bis 115 bereitgestellt werden; und
das Gesamtpolymer ein Polyester auf der Basis einer dimeren Fettsäure und/oder eines dimeren Fettdiols in einer Menge von 5 bis 30 Gew.-% enthält, wobei mindestens 60 Gewichtsprozent des Gesamtpolyesters auf der Basis einer dimeren Fettsäure und/oder eines dimeren Fettdiols in b) vorhanden sind; und
das Gesamtpolymer zu 5 bis 33 Gew.-% Polyetherpolyol enthält, wobei mindestens 70 Gewichtsprozent des Polyethers in dem Präpolymer vorhanden sind;
wobei das Polyester auf der Basis einer dimeren Fettsäure und/oder eines dimeren Fettdiols ein mittleres Molekulargewicht von 1 000 bis 5 000 Dalton aufweist und mindestens eine nichtdimere Polycarbonsäure enthält und das Polyetherpolyol eine mittlere Funktionalität von 2 bis 8 und ein mittleres Äquivalentgewicht von 1 000 bis 3 000 Dalton aufweist.

2. Verfahren gemäß Anspruch 1, wobei mindestens 70 Gewichtsprozent des Gesamtpolyesters auf der Basis einer dimeren Fettsäure und/oder eines dimeren Fettdiols in b) vorhanden sind.

3. Verfahren gemäß Anspruch 1, wobei mindestens 80 Gewichtsprozent des Gesamtpolyesters auf der Basis einer dimeren Fettsäure und/oder eines dimeren Fettdiols in b) vorhanden sind.

4. Verfahren gemäß Anspruch 1, wobei alles Gesamtpolyester auf der Basis einer dimeren Fettsäure und/oder eines dimeren Fettdiols in b) vorhanden ist.

5. Verfahren gemäß Anspruch 1, wobei die Polycarbonsäure Adipinsäure, Glutarsäure, Pimelinsäure, Korksäure, Azelainsäure, Sebacinsäure, Undecandisäure, Dodecandisäure, Bernstein-, Hexandisäure, Hexahydrophthalsäure, 1,3-Cyclohexandicarbonsäure, 1,4-Cyclohexandicarbonsäure; Fumarsäure, Maleinsäure; Phthalsäure, Terephthalsäure oder eine Mischung davon ist.

6. Verfahren gemäß Anspruch 5, wobei die Polycarbonsäure eine Mischung von Adipinsäure, Glutarsäure und Bernsteinsäure sind.

7. Verfahren gemäß Anspruch 6, wobei der Gewichtsanteil der Säuren 19 bis 26 Adipinsäure, 45 bis 52 Glutarinsäure und 16 bis 24 Bernsteinsäure ist, wobei die Gesamtgewichtsverhältnisse gleich 100 sind.

8. Verfahren gemäß Anspruch 1, wobei mindestens 80 Gewichtsprozent des Polyethers in dem Präpolymer vorhanden sind.

9. Verfahren gemäß Anspruch 1, wobei das Präpolymer ein Weichsegmentpräpolymer ist, wobei das Polyol ein Polyetherpolyol beinhaltet, welches ein Gemisch von (i) mindestens einem Diol oder Triol mit einem Molekulargewicht von 60 bis 300 und (ii) mindestens einem Polyoxyalkylenpolyol mit einer mittleren Funktionalität von 2 bis 4 und einem Molekulargewicht von 3 000 bis 12 000 ist, wobei das Gewichtsteilverhältnis von (a) : (b) von 0,01 : 1 bis 0,5 : 1 beträgt.

10. Verfahren gemäß Anspruch 1, wobei das Polyester ein zusätzliches Glycol enthält, das aus Ethylenglycol, Diethylenglycol, Propylenglycol, Dipropylenglycol, 1,3-Propandiol, 1,10-Decandiol, Glycerin, Trimethylolpropan, 1,4-Butandiol, 1,6-Hexandiol oder einer Mischung davon ausgewählt ist.

11. Verfahren gemäß Anspruch 10, wobei das zusätzliche Glycol Ethylenglycol, Diethylenglycol oder eine Kombination davon ist.

12. Verfahren gemäß Anspruch 1 wobei das Polyisocyanat ein aromatisches Polyisocyanat ist.

13. Verfahren gemäß Anspruch 12, wobei das Polyisocyanat MDI, TDI, PMDI oder eine Mischung davon ist.

14. Verfahren gemäß Anspruch 13, wobei das Polyisocyanat MDI mit zu mehr als 90 Gewichtsprozent dem 4,4'-Isomer ist.

15. Verfahren gemäß Anspruch 1 wobei das Polyisocyanat ein aliphatisches Isocyanat ist.

16. Verfahren gemäß Anspruch 15, wobei das Polyisocyanat HDI, IPDI, H12MDI, 1,2-Bis(isocyanatomethyl)cyclohexan oder eine Mischung davon ist.

17. Verfahren gemäß Anspruch 12, wobei das Präpolymer einen Isocyanatgehalt von 2 bis 30 Gewichtsprozent aufweist.

18. Verfahren gemäß Anspruch 1, wobei das Verfahren die Zugabe von Kettenverlängerer in einer Menge von 0,5 bis 10 Gewichtsprozent des zweiten Polyols umfasst.

19. Verfahren gemäß Anspruch 18, wobei der Kettenverlängerer 1,3-Cyclohexandimethanol, 1,4-Cyclohexandimethanol oder eine Mischung davon ist.

20. Verfahren gemäß Anspruch 1, wobei Wasser das Treibmittel mit 0,05 bis 2,0 Gewichtsteilen der zweiten Polyolkomponente ist.

21. Eine Schuhsohle, die durch das Verfahren gemäß einem der Ansprüche 1 bis 20 hergestellt wird.

22. Ein Zwei-Komponenten-System, das für die Herstellung eines Polyurethans geeignet ist, wobei das System die in Anspruch 1 definierte Isocyanatkomponente a) und die wie in Anspruch 1 definierte zweite Polyolzusammensetzung b) beinhaltet.

23. Ein Drei-Komponenten-System, das die in Anspruch 1 definierte Isocyanatkomponente a), die wie in Anspruch 1 definierte zweite Polyolzusammensetzung b) und eine Komponente, die einen Kettenverlängerer beinhaltet, beinhaltet.

## Revendications

1. Un procédé pour préparer un polymère polyuréthane en mettant en contact dans des conditions réactionnelles :
a) un constituant isocyanate comprenant un prépolymère à terminaison isocyanate ayant une teneur en isocyanate (NCO) de 2 à 45 pour cent en poids où le prépolymère est le produit de la réaction d'un excès stoechiométrique d'un ou de plusieurs di- ou polyisocyanates avec une première composition de polyol ;
b) une deuxième composition de polyol ; et
facultativement en présence c) d'allongeurs de chaîne, d'agents de réticulation, de catalyseurs, et d'autres additifs ;
dans lequel a), b) et les constituants de c), quand ils sont présents, sont fournis à un indice d'isocyanate allant de 85 à 115 ; et
le polymère total contient un polyester à base d'un acide gras dimère et/ou d'un diol gras dimère dans une quantité de 5 à 30 pour cent en poids, dans lequel au moins 60 pour cent en poids du polyester total à base d'un acide gras dimère et/ou d'un diol gras dimère est présent dans b) ; et
le polymère total contient de 5 à 33 pour cent en poids de polyol de polyéther, dans lequel au moins 70 pour cent en poids du polyéther est présent dans le prépolymère ; dans lequel le polyester à base d'un acide gras dimère et/ou d'un diol gras dimère a une masse moléculaire moyenne de 1 000 à 5 000 daltons et contient au moins un acide polycarboxylique non dimère et le polyol de polyéther a une fonctionnalité moyenne de 2 à 8 et un poids équivalent moyen de 1 000 à 3 000 daltons.

2. Le procédé de la revendication 1 dans lequel au moins 70 pour cent en poids du polyester total à base d'un acide gras dimère et/ou d'un diol gras dimère est présent dans b).

3. Le procédé de la revendication 1 dans lequel au moins 80 pour cent en poids du polyester total à base d'un acide gras dimère et/ou d'un diol gras dimère est présent dans b).

4. Le procédé de la revendication 1 dans lequel l'ensemble du polyester total à base d'un acide gras dimère et/ou d'un diol gras dimère est présent dans b).

5. Le procédé de la revendication 1 dans lequel l'acide polycarboxylique est l'acide adipique, l'acide glutarique, l'acide pimélique, l'acide subérique, l'acide azélaïque, l'acide sébacique, l'acide undécanedioïque, l'acide dodécanedioïque, succinique, l'acide hexanedioïque ; l'acide hexahydrophtalique, l'acide 1,3-cyclohexane dicarboxylique, l'acide 1,4-cyclohexane dicarboxylique ; l'acide fumarique, l'acide maléique ; l'acide phtalique, l'acide téréphtalique ou un mélange de ceux-ci.

6. Le procédé de la revendication 5 dans lequel l'acide polycarboxylique est un mélange d'acide adipique, d'acide glutarique et d'acide succinique.

7. Le procédé de la revendication 6 dans lequel le pourcentage en poids des acides va de 19 à 26 d'adipique, de 45 à 52 de glutarique et de 16 à 24 de succinique dans lequel les rapports en poids totaux sont égaux à 100.

8. Le procédé de la revendication 1 dans lequel au moins 80 pour cent en poids du polyéther est présent dans le prépolymère.

9. Le procédé de la revendication 1 dans lequel le prépolymère est un prépolymère à segments souples dans lequel le polyol comprend un polyol de polyéther qui est un mélange homogène (i) d'au moins un diol ou triol ayant une masse moléculaire allant de 60 à 300 et (ii) d'au moins un polyol de polyoxyalkylène ayant une fonctionnalité moyenne allant de 2 à 4 et une masse moléculaire allant de 3 000 à 12 000, dans lequel le rapport de parties en poids de (a)/(b) va de 0,01/1 à 0,5/1.

10. Le procédé de la revendication 1 dans lequel le polyester contient un glycol supplémentaire sélectionné parmi l'éthylène glycol, le diéthylène glycol, le propylène glycol, le dipropylène glycol, le 1,3-propanediol, le 1,10-décanediol, la glycérine, le triméthylolpropane, le 1,4-butanediol, le 1,6-hexanediol, ou un mélange de ceux-ci.

11. Le procédé de la revendication 10 dans lequel le glycol supplémentaire est l'éthylène glycol, le diéthylène glycol, ou une combinaison de ceux-ci.

12. Le procédé de la revendication 1 dans lequel le polyisocyanate est un polyisocyanate aromatique.

13. Le procédé de la revendication 12 dans lequel le polyisocyanate est un MDI, un TDI, un PMDI ou un mélange de ceux-ci.

14. Le procédé de la revendication 13 dans lequel le polyisocyanate est un MDI ayant plus de 90 pour cent en poids de l'isomère 4,4'.

15. Le procédé de la revendication 1 dans lequel le polyisocyanate est un isocyanate aliphatique.

16. Le procédé de la revendication 15 dans lequel le polyisocyanate est un HDI, un IPDI, un H12MDI, un 1,2-bis(isocyanatométhyl)cyclohexane ou un mélange de ceux-ci.

17. Le procédé de la revendication 12 dans lequel le prépolymère a une teneur en isocyanate allant de 2 à 30 pour cent en poids.

18. Le procédé de la revendication 1, le procédé incluant l'ajout d'allongeur de chaîne dans une quantité de 0,5 à 10 pour cent en poids du deuxième polyol.

19. Le procédé de la revendication 18 dans lequel l'allongeur de chaîne est le 1,3-cyclohexane diméthanol, le 1,4-cyclohexane diméthanol ou un mélange de ceux-ci.

20. Le procédé de la revendication 1 dans lequel l'eau est l'agent gonflant à hauteur de 0,05 à 2,0 parties en poids du deuxième constituant polyol.

21. Une semelle de chaussure produite par le procédé de n'importe laquelle des revendications 1 à 20.

22. Un système à deux constituants convenant à la production d'un polyuréthane, le système comprenant le constituant isocyanate a) défini dans la revendication 1 et la deuxième composition de polyol b) telle que définie dans la revendication 1.

23. Un système à trois constituants comprenant le constituant isocyanate a) défini dans la revendication 1, la deuxième composition de polyol b) telle que définie dans la revendication 1 et un constituant qui comprend un allongeur de chaîne.
